# FASCICULE DE BREVET EUROPEEN

(11) **EP 0 316 684 B1**
(45) Date de publication et mention de la délivrance du brevet: **23.02.1994**
(21) Numéro de dépôt: 88118378.4
(22) Date de dépôt: 04.11.1988
(51) Int. Cl.: G02B 7/00, G02B 7/18

(54) **Support pour élément optique**
Träger für ein optisches Element
Support for optical element

(30) Priorité: 17.11.1987 CH 4470/87; 30.11.1987 FR 8716695
(43) Date de publication de la demande: 24.05.1989
(73) Titulaire: LASAG AG, CH-3600 Thun (CH)
(72) Inventeur: Gressly, André, CH-3612 Steffisburg (CH); Bigler, Andreas, CH-3612 Steffisburg (CH)
(74) Mandataire: de Montmollin, Henri

(56) Documents cités:
- EP-A- 0 179 426
- DE-C- 3 319 466
- GB-A- 2 136 145
- PATENT ABSTRACTS OF JAPAN, vol. 10, no. 93 (P-445)(2150), 10 Avril 1986 & JP A 60227211
- PATENT ABSTRACTS OF JAPAN, vol. 6, no. 92 (P-119)(970), 29 mai 1982 & JP A 57027231

## Description

La présente invention a pour objet un support pour un élément optique tel qu'un miroir, une lentille, un réseau, un diaphragme ou autre.

Le support selon l'invention trouve application dans tous les appareils comportant un système optique dans lesquels il est nécessaire, ou au moins souhaitable, de pouvoir ajuster la position de l'élément optique par rapport à l'axe optique du système optique. Le support selon l'invention peut ainsi notamment être utilisé dans un laser comme support des miroirs situés aux deux extrémités de la cavité laser.

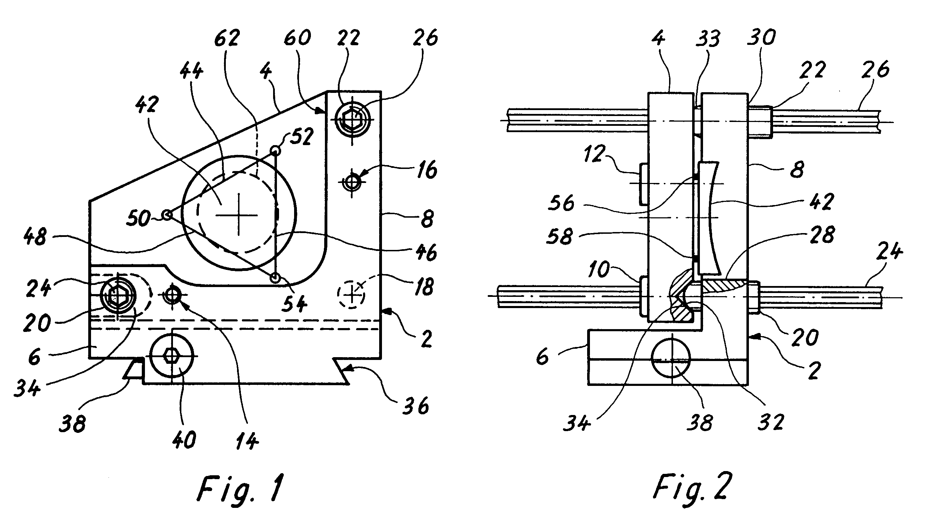

On a représenté sur les figures 1 et 2 respectivement une vue de face et une vue de côté d'un support de type connu.

Ce support comprend essentiellement un bâti 2 sur lequel une plaque 4 est maintenue en appui. Le bâti se compose d'un socle 6 et d'une partie 8, solidaire du socle 6, et sur laquelle la plaque 4 est maintenue en appui par deux vis 10, 12. Chaque vis comprend une tête appliquée sur une face de la plaque, une tige traversant la plaque 4 et vissée dans un trou fileté 14, 16 de la partie 8, et un ressort disposé concentriquement à la tige de la vis dans un trou borgne de la plaque. Ce ressort appuie d'une part sur la tête de la vis et d'autre part sur le fond du trou borgne, maintenant ainsi la plaque 4 contre la partie 8.

Le contact entre la plaque 4 et le bâti 2 est réalisé en trois points: un point fixe référencé 18 et qui peut être matérialisé par un bossage sur la plaque 4 coopérant avec un trou conique dans la partie 8, et deux points mobiles définis par deux vis réglables 20, 22. Chacune de ces vis est montée sur une tige hexagonale 24, 26 et se visse dans un trou fileté 28, 30 traversant la partie 8. Deux trous sont également pratiqués dans la plaque 4 pour le passage des tiges hexagonales 24, 26. Les points mobiles permettent d'éviter que des contraintes naissent dans la plaque 4 lorsqu'une variation relative des dimensions de la plaque 4 et du bâti 2 se produit, par exemple à la suite d'une variation de température.

Comme le montre la figure 2, l'extrémité 32 de la vis 20 est arrondie. Cette extrémité est logée dans une gorge triangulaire 34 ménagée dans la plaque 4. L'extrémité de la vis 20 peut ainsi se déplacer librement suivant l'axe de la gorge. L'extrémité 33 de la vis 22 est plane ou arrondie; elle s'appuie sur la surface de la plaque 4 et peut se déplacer librement suivant toutes les directions. Pour rendre ces déplacements possibles, les trous borgnes dans lesquels sont logés les ressorts associés aux vis 10, 12 et les trous pratiqués dans la plaque 4 pour le passage des tiges hexagonales 24, 26, sont prévus avec un diamètre suffisant pour que les ressorts et les tiges hexagonales puissent avoir de petits mouvements dans un plan perpendiculaire à l'axe des vis.

Les points de contact définis par les extrémités des vis de réglage 20, 22 et par le point fixe 18 forment un triangle rectangle. Ainsi, on peut déplacer la plaque 4 en rotation autour d'un premier axe défini par la vis de réglage 20 et le point fixe 18, en vissant ou en dévissant la vis de réglage 22. De même, la plaque 4 est mobile autour d'un second axe, perpendiculaire au premier axe, défini par la vis de réglage 22 et le point fixe 18, lorsque l'on visse ou dévisse la vis de réglage 20.

Ces deux degrés de liberté permettent d'orienter la plaque 4, et par conséquent l'axe optique du support, qui est perpendiculaire à cette plaque 4, dans la direction désirée.

Un troisième degré de liberté est prévu: une queue d'aronde 36 est réalisée dans la base du socle 6. Elle permet un déplacement en translation selon une direction perpendiculaire à la partie 8, c'est-à-dire sensiblement parallèle à l'axe optique du support. Cette translation est guidée par un rail (non représenté) dans lequel glisse la queue d'aronde 36. La position du bâti peut être bloquée en commandant la sortie d'un taquet 38 au moyen d'une vis 40.

L'élément optique 42 est maintenu en appui contre une face de la plaque 4 par trois lamelles élastiques 44, 46, 48 fixées en triangle sur trois plots 50, 52, 54 (non représentés sur la figure 2). Le contact entre la plaque 4 et l'élément optique 42 est réalisé par exemple en trois points sur des élément hémisphériques tels que 56, 58 solidaires de la plaque 4.

Dans le cas où l'élément optique 42 est fixé sur la face de la plaque 4 qui s'appuie sur la partie 8, cette partie 8 comprend un évidement 60 suffisant pour ne pas gêner l'élément optique 42 et ses moyens de fixation. De même, si l'élément optique 42 est au moins partiellement transparent, la plaque 4 doit être pourvue d'une ouverture 62 en regard de l'élément optique pour permettre la transmission du faisceau optique.

Le support connu représenté sur les figures 1 et 2 n'est pas pleinement satisfaisant. En effet, le système de fixation de 1 élément optique sur la plaque ne permet pas un positionnement précis et reproductible de cet élément optique. Ceci est gênant dans de nombreux cas, notamment lorsque la surface de l'élément optique n'est pas plane, mais au contraire concave ou convexe, et que la surface d'impact du faisceau optique sur cette surface doit impérativement être perpendiculaire à la direction du faisceau optique.

Cette contrainte se présente en particulier pour les miroirs concaves qui forment les extrémités de la cavité résonnante d'un laser. Dans ce cas, lors d'un changement de miroir, le nouveau miroir n'est en général pas positionné exactement comme le précédent miroir, et il est nécessaire de procéder à des réglages délicats des vis 20 et 22 pour que la condition de perpendicularité soit de nouveau respectée.

Par ailleurs, les miroirs utilisés dans les lasers se dégradent assez rapidement au point d'impact du faisceau. Il est donc nécessaire de déplacer périodiquement le miroir pour changer le point d'impact. Dans le cas d'un miroir sphérique, ou peu asphérique, il est courant de choisir un point d'impact ne se trou- vant pas sur l'axe du miroir, et de changer le point d'impact en faisant tourner légèrement le miroir autour de son axe. Les points d'impact successifs se trouvent alors sur un cercle centré sur l'axe du miroir; les zones successives du miroir où se produit l'impact ont la même orientation par rapport au faisceau laser et il n'est donc normalement pas nécessaire de régler la position du miroir après chaque changement de point d'impact. Cependant, en pratique, la manipulation du miroir en rotation entraîne toujours un déplacement involontaire de l'axe du miroir à cause des imperfections du système de fixation du miroir sur la plaque. Il faut donc procéder à des réglages longs et délicats après chaque changement de zone de point d'impact, pour que la nouvelle zone de point d'impact soit perpendiculaire au faisceau laser.

Un second inconvénient du système de fixation connu de l'élément optique tient à ce que les lamelles élastiques s'appuient sur une face de l'élément optique et ont tendance à la rayer.

Le document EP-A-179 426 décrit un support pour élément optique présentant les caractéristiques énoncées dans le préambule de la revendication principale annexée. Ce support comprend notamment des moyens de réglage pour ajuster la position d'une pièce de support pour l'élément optique et donc la position de l'élément optique lui-même dans le plan parallèle à la plaque sur laquelle il est monté. Ce support pour élément optique remédie donc au premier inconvénient de l'art antérieur cité plus haut. Toutefois selon ce document, l'élément optique est fixé à la pièce de support à l'aide de plusieurs vis. Une telle construction présente les inconvénients d'une part de rendre laborieux le remplacement de l'élément optique, et d'autre part de rendre impossible le déplacement de l'élément optique pour changer le point d'impact du faisceau lumineux.

L'invention a pour but de supprimer les inconvénients des supports connus, et notamment de fournir un support pour élément optique permettant un positionnement précis de cet élément optique sans pour autant limiter les possibilités de déplacement, en rotation par exemple, de celui-ci. Ce but est atteint par un support conforme aux revendications annexées.

Ce support comporte une bague disposée entre la plaque et l'élément optique et des moyens pour régler de manière précise et reproductible la bague, donc l'élément optique, par rapport à la bague. Ceci permet notamment, dans le cas des miroirs sphériques utilisés dans la cavité résonnante d'un laser, de changer le point d'impact simplement en faisant tourner le miroir sphérique, sans aucun réglage supplémentaire. On comprend également que le support selon l'invention permet de faciliter le remplacement d'un élément optique.

Les caractéristiques et avantages de l'invention ressortiront mieux de la description qui va suivre, donnée à titre illustratif mais non limitatif, en référence aux dessins annexés, sur lesquels :
- les figures 1 et 2, déjà décrites, illustrent respectivement une vue de face et une vue de côté d'un support connu pour élément optique;
- la figure 3 est une vue en perspective montrant l'assemblage des différents éléments composant un support pour élément optique selon l'invention;
- les figures 4, 5 et 6 illustrent respectivement une vue de face, une vue de côté et une vue arrière partiellement en coupe du support de la figure 3 après assemblage de ses différents éléments; et
- la figure 7 illustre une variante de réalisation de la bague du support selon l'invention.

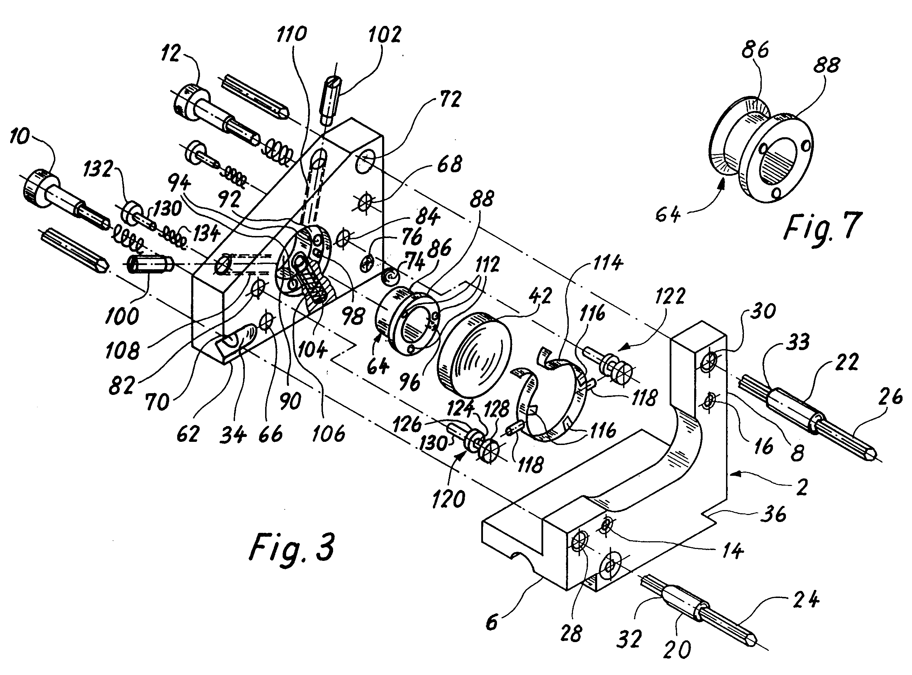

On va maintenant décrire, en référence aux figures 3 à 6, un support pour élément optique conforme à l'invention. Sur ces figures, les éléments identiques à ceux du support connu représenté sur les figures 1 et 2 portent les mêmes références.

Le support comprend essentiellement un bâti 2, une plaque 62 et une bague 64 contre laquelle l'élément optique 42 est maintenu en appui. Les dimensions de la bague sont choisies de manière que l'élément optique 42 ne soit pas en contact avec la plaque 62. Le bâti 2 est identique à celui du support connu. Il comprend un socle 6 et une partie 8 dans laquelle sont pratiqués deux trous filetés 14, 16 destinés à recevoir des vis de fixation 10, 12, et deux trous filetés 28, 30, destinés à recevoir deux vis de réglage 20, 22.

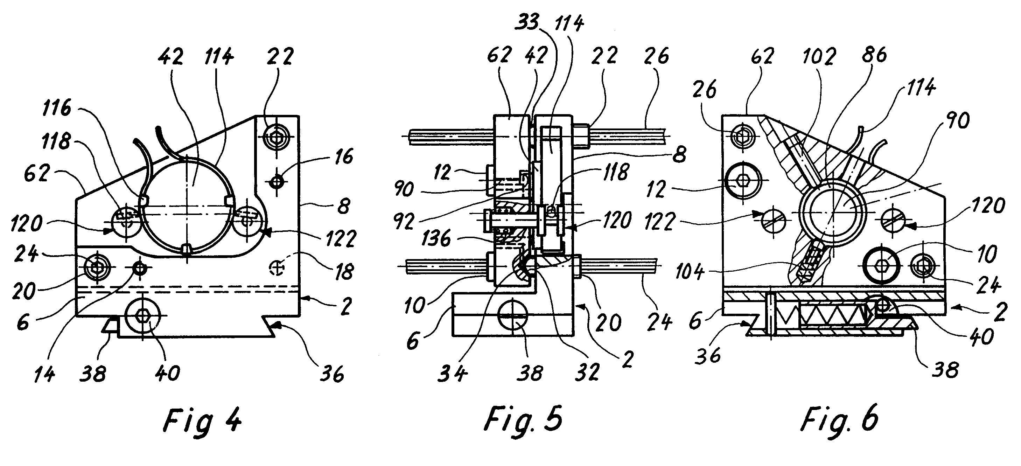

La plaque 62 comporte deux trous 66, 68 permettant le passage des tiges des vis 10, 12 et deux trous 70, 72 permettant le passage des tiges hexagonales 24, 26. Le trou 70 se trouve dans le fond de la gorge triangulaire 34 sur laquelle vient s'appuyer l'extrémité 32 de la vis de réglage 20. L'extrémité 33 de la vis 22 s'appuie, quant à elle, sur la surface de la plaque 62, au voisinage du bord du trou 72. Ces éléments existent déjà dans la plaque 4 du support connu représenté sur les figures 1 et 2. Le point fixe référencé 18 sur la figure 4 est matérialisé sur la figure 3, à titre d'exemple, par une bille 74 disposée dans un trou conique 76 de la plaque 62 et dans un trou conique semblable (non représenté) de la partie 8 du bâti 2.

La plaque 62 du support selon l'invention comprend en outre deux trous supplémentaires 82, 84 qui sont destinés a permettre le passage de vis de fixation de l'élément optique comme on le verra dans la suite de la description.

La plaque 62 comprend également un logement pour la bague 64 et des moyens pour ajuster la position de cette bague dans un plan parallèle à la plaque.

Dans le mode de réalisation représenté, la bague 64 est constituée d'un corps cylindrique 86 dont l'une des extrémités est munie d'une collerette 88. Cette bague est introduite dans un logement de la plaque 62 comprenant une cavité cylindrique 90 et un épaulement 92. Dans le cas d'un élément optique 42 au moins partiellement transparent, la cavité 90 est en fait un trou traversant la plaque 62.

Le fond de l'épaulement 92 comprend trois plots 94 sur lesquels vient s'appuyer la collerette 88 de la bague 64. Ces plots 94 peuvent avoir la forme de disques ou de demi-billes et être collés dans le fond d'épaulement. De manière avantageuse, la bague 64 est réalisée en un matériau magnétique, par exemple en acier, et les plots sont constitués par de petits aimants.

Les diamètres de la cavité 90 et de l'épaulement 92 sont prévus supérieurs respectivement aux diamètres du corps 86 et de la collerette 88 de la bague, afin de permettre le déplacement de la bague par rapport à la plaque 64 dans un plan parallèle à cette plaque.

Pour éviter un déplacement trop important de la bague 64, la face arrière de la collerette 88 peut être munie d'un logement 96 dans lequel s'engage un ergot 98 fixé dans le fond de l'épaulement 92. Le diamètre du logement 96 est prévu suffisamment grand pour permettre les réglages de position souhaités pour la bague tout en interdisant des mouvements trop importants, tels qu'un mouvement de rotation de la bague 64 par rapport à la plaque 62.

Les moyens de réglage de la position de la bague dans le plan de la plaque 62 sont visibles sur les figures 3 et 6. Ils comprennent deux vis de réglage 100, 102 et un ressort 104. Ces éléments sont répartis dans un plan parallèle à la plaque 62 et sont orientés radialement par rapport à la bague cylindrique.

Le ressort 104 est disposé dans un trou borgne 106 dont l'ouverture se trouve dans la cavité 90, et les vis de réglage 100, 102 sont disposées dans des trous filetés 108, 110 reliant la cavité à une face de la plaque 62.

Comme on l'a représenté sur les figures 3 et 6, les vis de réglage 100, 102 peuvent avoir une longueur inférieure aux trous filetés 108, 110. Ceci permet d'avoir un encombrement minimum. Mais il est bien entendu possible d'utiliser des vis de réglage 100, 102 plus longues que les trous filetés 108, 110. La tête de chaque vis est alors à l'extérieur du trou fileté, ce qui peut faciliter les opérations de vissage et de dévissage, mais ce qui augmente en revanche l'encombrement du support.

Par ailleurs, il est clair que la position et le nombre de vis de réglage et de ressorts peuvent être différents de ceux représentés.

On a indiqué plus haut que la bague 64 pouvait être maintenue dans la cavité 90 par des plots aimantés 94. Une autre possibilité, illustrée sur la figure 7, consiste à utiliser une bague dont le corps 86 est tronconique sur au moins une partie de sa longueur, l'extrémité du corps située du côté de la collerette ayant un diamètre inférieur à l'autre extrémité; dans ce cas, la bague est maintenue en appui par la pression exercée par les vis 100, 102 et le ressort 104 sur le corps 86.

L'élément optique 42 est maintenu en appui contre la bague 64. Il peut ainsi être déplacé dans le plan parallèle à la plaque en agissant sur les vis de réglage 100, 102 qui commandent la position de la bague 64.

Plus précisément, l'élément optique 42 est appuyé contre trois plots 112 fixés, par collage, sertissage ou autre, sur la face de la collerette 88. Ces plots ont de préférence une forme arrondie, par exemple hémisphérique, de manière à pouvoir recevoir sans dommage des éléments optiques ayant des surfaces planes, concaves ou convexes.

Pour faciliter sa manipulation, l'élément optique 42 est monté sur une pince élastique 114. Celle-ci se compose d'un ruban formant une boucle de diamètre légèrement inférieur au diamètre de l'élément optique. Les extrémités du ruban sont recourbées. Elles peuvent être écartées pour augmenter le diamètre de la boucle lorsque l'on désire insérer l'élément optique dans la pince. Le ruban comporte une ou plusieurs languettes 116 qui permettent de positionner correctement l'élément optique dans la pince, et deux ergots 118 qui constituent une partie des moyens d'appui de l'élément optique sur la bague 64.

Ces moyens d'appui comprennent deux tiges à gorge 120, 122 identiques. Comme le montre la figure 3, la tige à gorge 120 comprend une gorge 124 limitée par deux collerettes 126, 128, une tige 130, une tête 132 et un ressort 134. La tige 130 traverse le trou 82 de la plaque 62. Le ressort 134 est logé dans une cavité 136 (cf fig. 5) plus large que le trou 82; il exerce une force sur la tête 132 qui tend a rapprocher la gorge 124 de la plaque 62. Cette gorge est destinée à recevoir un ergot 118 de la pince élastique 114; les tiges à gorge 120, 122 permettent donc d'appuyer l'élément optique 42 contre la bague 64 et la bague 64 contre la plaque 62.

L'insertion ou l'extraction d'un élément optique 42 sur le support se fait simplement en appuyant sur les têtes des tiges à gorge 120, 122 pour supprimer la force d'appui exercée sur les ergots 118 de la pince élastique 114.

## Revendications

1. Support pour élément optique comprenant un bâti (2) comportant un socle (6) et une partie (8) solidaire dudit socle, une plaque (62) pour recevoir ledit élément optique (42), la direction perpendiculaire au plan de ladite plaque (62) coïncidant avec l'axe optique de l'élément à placer sur le support, des premiers moyens de fixation (10, 12) pour appuyer ladite plaque (62) contre ladite partie (8), des seconds moyens de fixation (114, 120, 122, 134) pour maintenir ledit élément optique, une bague (64) disposée entre ladite plaque (62) et ledit élément optique (42), l'élément optique n'étant pas en contact avec ladite plaque et la plaque (62) étant pourvue d'une cavité (90), la bague (64) étant introduite avec du jeu dans la cavité de façon à rendre ladite bague mobile par rapport à la plaque perpendiculairement à l'axe optique du support, et des moyens de réglage (100, 102, 104) pour ajuster la position de la bague et de l'élément optique dans le plan parallèle à ladite plaque, ledit support étant caractérisé en ce que la paroi de ladite cavité (90) est conformée pour fournir un appui (92) pour retenir ladite bague (64) dans une direction perpendiculaire au plan de ladite plaque (62), et en ce que lesdits seconds moyens de fixation sollicitent élastiquement ledit élément optique (42) et ladite bague (64) vers ladite plaque (62).

2. Support selon la revendication 1, caractérisé en ce que la bague (64) est munie à une extrémité d'une collerette (88), une face de la collerette étant appuyée sur le fond d'un épaulement (92) pratiqué dans la plaque (62) et l'autre face recevant l'élément optique.

3. Support selon l'une des revendications 1 ou 2, caractérisé en ce que la plaque (62) et la bague (64) comportent des moyens de positionnement (96, 98) qui coopèrent pour assurer un prépositionnement de la bague par rapport à la plaque.

4. Support selon l'une quelconque des revendications 1 à 3, caractérisé en ce que le contact entre la bague (64) et l'élément optique (14) est réalisé par trois plots hémisphériques solidaires de la bague.

5. Support selon l'une quelconque des revendications 1 à 4 dans lequel la bague est réalisée dans un matériau magnétique, caractérisé en ce que le contact entre la bague (64) et la plaque (62) est réalisé par trois plots aimantés (94) solidaires de la plaque.

## Claims

1. Support for an optical element comprising a frame (2) having a base (6) and a part (8) fixedly attached to said base, a plate (62) for receiving said optical element (42) whereby the direction perpendicular to the plane of the plate (62) coincides with the optical axis of the element to be placed on the support, first fixing means (10; 12) for pressing said plate (42) against said plate (8), second fixing means (114, 120, 122, 134) for holding said optical element, a ring (64) arranged between said plate (62) and said optical element (42), the optical element not being in contact with said plate and the plate (62) having a cavity (90), the ring (64) being introduced with play into the cavity so that said ring is movable perpendicularly to the optical axis of the support relative to the plate, and adjusting means (100, 102, 104) for adjusting the position of the ring and the optical element in the plane parallel to said plate, said support being characterised in that the wall of said cavity (90) is formed such as to provide a rest (92) for keeping said ring (64) in a direction perpendicular to the plane of said plate (62), and in that said second fixing means solicit elastically said optical element (42) and said ring (64) towards said plate (62).

2. Support according to claim 1, characterised in that the ring (64) is provided at one end with a flange (88), one face of the flange being pressed against the surface of a shoulder (92) formed in the plate (62) and the other face receiving the optical element.

3. Support according to claim 1 or 2, characterised in that the plate (62) and the ring (64) comprise positioning means (96, 98) cooperating to ensure a prepositioning of the ring relative to the plate.

4. Support according to any of the claims 1 to 3, characterised in that the contact between the ring (64) and the optical element (14) is obtained by three hemispherical pins attached to the ring.

5. Support according to any of the claims 1 to 4, in which the ring is made of a magnetical material, characterised in that the contact between the ring (64) and the plate (62) is obtained by three magnetic pins (94) attached to the plate.

## Patentansprüche

1. Support für ein optisches Element, umfassend ein Gestell (2) mit einem Sockel (6) und einer mit dem Sockel verbundenen Partie (8), eine Platte (62) zur Aufnahme des optischen Elements (42), wobei die Richtung senkrecht zur Ebene der Platte (62) mit der optischen Achse des auf dem Support zu plazierenden optischen Elements zusammenfällt, erste Befestigungsmittel (10, 12) zum Andrücken der Platte (62) an die Partie (8), zweite Befestigungsmittel (114, 120, 122, 134) zum Halten des optischen Elements, einen zwischen der Platte (62) und dem optischen Element (42) angeordneten Ring (64), wobei das optische Element nicht in Kontakt mit der Platte ist und die Platte (62) mit einem Hohlraum (90) versehen ist, wobei der Ring (64) mit Spiel in den Hohlraum eingefügt ist, derart, daß der Ring beweglich zu der Platte senkrecht zur optischen Achse des Supports ist, und Einstellmittel (100, 102, 104) zum Einstellen der Position des Ringes und des optischen Elementes in der Ebene parallel zu der Platte, welcher Support dadurch gekennzeichnet ist, daß die Wandung des Hohlraums (90) ausgebildet ist zum Bereitstellen eines Anschlags (92) zum Halten des Ringes (64) in einer Richtung senkrecht zur Ebene der Platte (62) und daß die zweiten Befestigungsmittel das optische Element (42) und den Ring (64) elastisch in Richtung der Platte (62) vorspannen.

2. Support nach Anspruch 1, dadurch gekennzeichnet, daß der Ring (64) an einem Ende mit einem Kragen (88) versehen ist, wobei eine Seite des Kragens an dem Boden einer Schulter (92), eingearbeitet in die Platte (62), angedrückt wird und die andere Seite das optische Element aufnimmt.

3. Support nach einem der Ansprüche 1 oder 2, dadurch gekennzeichnet, daß die Platte (62) und der Ring (64) Positioniermittel (9 6, 98) umfassen, die zusammenwirken zum Sicherstellen einer Vorpositionierung des Ringes relativ zu der Platte.

4. Support nach einem der Ansprüche 1 bis 3, dadurch gekennzeichnet, daß der Kontakt zwischen dem Ring (64) und dem optischen Element (14) durch drei halbkugelige, mit dem Ring verbundene Noppen realisiert wird.

5. Support nach einem der Ansprüche 1 bis 4, bei welchem der Ring aus einem magnetischen Material hergestellt ist, dadurch gekennzeichnet, daß der Kontakt zwischen dem Ring (64) und der Platte (62) durch drei magnetisierte, mit der Platte verbundene Noppen (94) realisiert wird.
